# EUROPÄISCHE PATENTSCHRIFT

(11) **EP 1 211 066 B1**
(45) Veröffentlichungstag und Bekanntmachung des Hinweises auf die Patenterteilung: **10.10.2007**
(21) Anmeldenummer: 01811138.5
(22) Anmeldetag: 21.11.2001
(51) Int. Cl.: B41C 1/10, G02B 27/09, G02B 3/06

(54) **Abbildungsvorrichtung**
Imaging apparatus
Dispositif d'imagerie

(30) Priorität: 27.11.2000 DE 10058761
(43) Veröffentlichungstag der Anmeldung: 05.06.2002
(73) Patentinhaber: WIFAG Maschinenfabrik AG, 3014 Bern (CH)
(72) Erfinder: Riepenhoff, Matthias, 3015 Bern (CH)
(74) Vertreter: Gassenhuber, Andreas

(56) Entgegenhaltungen:
- EP-A- 0 841 806
- EP-A- 0 915 541
- EP-A- 0 992 350
- EP-A1- 0 905 537
- US-A- 5 289 313
- US-A- 5 600 476
- US-A- 5 745 153
- US-A- 5 790 576
- US-A- 5 973 853
- US-A- 6 144 685
- MICHAEL P. KEATING: "Geometric, Physical and Visual Optics" 1988, BUTTERWORTHS * Seite 435 *

## Beschreibung

Die vorliegende Erfindung bezieht sich allgemein auf eine Abbildungsvorrichtung für das Bebildern einer Druckform, zum Beispiel einer auf einer Drucktrommel aufgespannten Druckplatte, welche zum Beispiel im Rollenrotationsdruck oder Zeitungsdruck verwendet werden kann. Insbesondere bezieht sich die Erfindung auf eine Abbildungsoptik, insbesondere ein Linsensystem, für einen kanten- oder flächen-emittierenden Laser, insbesondere eine kanten- oder flächen-emittierende Halbleiter-Laserdiode, sowie auf ein Verfahren zum Bebildern einer Druckform.

Es ist bekannt zum Bebildern von Druckplatten Laser zu verwenden, wobei verschiedene Verfahren verwendet werden, um eine Druckplatte mit einem Laserstrahl zu bebildern. Bei sogenannten Innentrommelbelichtern wird unter Verwendung eines schnell rotierenden Mehrfachspiegels der Laserlichtstrahl über die in der Trommel liegende zu belichtende Platte geführt, wodurch eine Bildzeile erzeugt wird, wobei der sich drehende Spiegel entlang seiner Rotationsachse kontinuierlich verschoben wird, um so sukzessive die gesamte Plattenoberfläche durch den Laser zu bebildern. Dabei wird das Laserlicht in Abhängigkeit von den Bilddaten so moduliert, dass auf der Druckplatte das gewünschte Bild entstehen kann. Weiterhin ist es bekannt, einen Bebilderungsvorgang durchzuführen, bei dem die Druckform außen auf einem Zylinder befestigt ist oder die Zylinderoberfläche selbst die Druckform bildet, was als Außentrommelprinzip bezeichnet wird. Dieses Außentrommelprinzip wird bei der Druckformbebilderung in der Druckmaschine eingesetzt. Würde ein einziger Laser verwendet werden, so müsste der Druckform-Zylinder äußerst schnell gedreht werden, um eine vollständige Bebilderung in einer annehmbaren Zeit durchzuführen, wobei der Laserstrahl parallel zur Drehachse verschoben werden müsste, um die gesamte Fläche der Druckform zu bebildern. Dieses Verfahren ist jedoch aufgrund der dabei auftretenden großen Geschwindigkeiten technisch äußerst aufwendig. Um die Rotationsgeschwindigkeit des Druckplattenzylinders verringern zu können, werden mehrere Laserlichtquellen eingesetzt, welche als ein Laser-Array angeordnet sind, um mit einem solchen Laser-Array bei jeder Umdrehung des Druckformzylinders mehrere Spalten eines Bildes erzeugen zu können, wobei dieses Array entlang der Druckform verschoben wird, um die gesamte Druckform zu bebildern.

Als Laser-Array werden beispielsweise mehrere Laserdioden verwendet, wobei das von den Laserdioden ausgesandte Licht in jeweils eine optische Faser eingekoppelt wird und an dem der Druckplatte gegenüberliegenden Ende der Faser als Lichtkegel unter einem Öffnungswinkel von zum Beispiel 16° austritt und mit Linsen auf die Druckform fokussiert wird. Weiterhin sind kantenemittierende Laserdioden bekannt, bei welchen Laserlicht in Form eines schmalen Streifens austritt, wobei ein Streifen zum Beispiel zwischen 60 und 200 µm breit sein kann und beispielsweise eine Höhe von weniger als 1 µm aufweist. Dabei wird das Laserlicht in vertikaler Richtung gewöhnlich unter einem größeren Abstrahlwinkel von zum Beispiel 35 bis 40° und in horizontaler Richtung unter einem kleineren Winkel von zum Beispiel 8 bis 10° abgestrahlt. Dabei ist es erforderlich, das Laserlicht durch eine geeignete Abbildungsoptik auf die zu bebildernde Druckform so zu fokussieren, dass eine möglichst hohe Qualität des durch das Laserlicht erzeugten Bildes erreicht wird.

Die EP 0 915 541 A2 offenbart ein System und Verfahren zum Erzeugen von Bildpunkten mit konstanter Größe, wobei mit einem Laser einLaserkristall gepumpt wird und die Emission des Laserkristalls auf ein Aufzeichnungsmedium gerichtet wird. Eine zylinderförmige Linse ist zusammen mit einer bi-asphärischen Linse zwischen dem Laser und dem Laserkristall angeordnet, während eine plan-konvexe Linse zwischen dem Laserkristall und dem Aufzeichnungsmedium angeordnet ist.

Die EP 0 992 350 A1 bezieht sich auf einen Scanner und insbesondere das Scannen einer optischen Ausgabe und offenbart eine Vorrichtung zur Lichtmodulation und Belichtung, wobei ein von einer Lichtquelle ausgesandtes Licht mittels einer Beleuchtungsoptik auf einen linearen Mehrkanal-Modulator gerichtet wird, der durch ihn hindurch tretendes Licht auf eine Abbildungsoptik richtet, welche dieses Licht auf eine Fokusebene einer Trommel bündelt Eine Bilddateneingabeeinheit weist eine Datensynchronisationsvorrichtung auf und verschiebt die Abbildungsdaten durch den linearen Modulator mit der Geschwindigkeit Vm = -V_{S}/M, wobei V_{S} die Geschwindigkeit ist, mit welcher das Bild der Modulatorausgabe, beleuchtet durch die Lichtquelle, bewegt wird und M die Vergrößerung zwischen dem Modulator und der Ausgabeebene ist.

Aus der US 6,144,685 ist ein zwei-dimensionales oberflächenemittierendes Laserarray bekannt, wobei mehrere Laser bei vorgegebenen Positionen und gleichem Abstand auf mindestens zwei Haupt-Abtastlinien auf einem Halbleitersubstrat angeordnet sind. Die Laser haben jeweils einen vorgegebenen Strahlendurchmesser und nehmen verschiedene Positionen in der Haupt-Abtastrichtung ein, wodurch ein zwei-dimensionales oberflächenexnittierendes Laserarray geschaffen wird, welches Laserstrahlen durch ein Linsensystem emittiert, um eine Pixellinie ohne Lücke in der Haupt-Abtastlinie einer Bilderzeugungsoberfläche zu erzeugen.

Es ist die Aufgabe der vorliegenden Erfindung, eine Abbildungsvorrichtung zum Bebildern einer Druckform mit Halbleiter-Laserdioden, vorzuschlagen, welche das Erzeugen von Bildern ermöglichen, die hinsichtlich Qualität und Kosten die Anforderungen zum Beispiel im Zeitungsdruck erfüllen.

Diese Aufgabe wird durch eine Vorrichtung mit den Merkmalen des unabhängigen Anspruchs gelöst. Vorteilhafte Ausführungsformen ergeben sich aus den Unteransprüchen.

Das erfindungsgemäße Linsensystem, welches als Abbildungsoptik für kantenemittierende Halbleiter-Laserdioden zum Bebildern einer Druckform, beispielsweise einer Druckplatte auf einer Drucktrommel, verwendet werden kann, weist mindestens eine sphärische Linse auf, welche zwischen einer oder mehreren Laserlichtquellen und einer zu bebildernden Druckform zum Bündeln des von einem oder mehreren Lasern ausgesandten Laserlichts angeordnet werden kann. Dabei muss das Laserlicht nicht zwangsläufig fokussiert werden. Es reicht vielmehr aus, den Abstrahlwinkel des Laserlichtes zu verkleinern. Weiterhin weist das Linsensystem mindestens eine asphärische Linse auf, welche bevorzugt zwischen der sphärischen Linse und der zu bebildernden Druckform angeordnet wird, um das von einem Laser ausgesandte und von der mindestens einen sphärischen Linse gebündelte Laserlicht zu konvergieren und bevorzugt eine Korrektur der sphärischen Aberration durchzuführen, wobei das Linsensystem bevorzugt so ausgerichtet ist, dass ein möglichst kleiner Einstrahlwinkel bei der zu bebildernden Druckform erhalten wird, um eine hohe Tiefenschärfe zu erhalten. Mit der Kombination von sphärischen und asphärischen Linsen zum Fokussieren des von einem bevorzugt kanten- oder flächenemittierenden Laser ausgesandten Lichtes auf der Druckform kann eine qualitativ hochwertige Bebilderung vorgenommen werden, da die sphärische Linse, welche gewöhnlich geschliffen wird, eine hohe Oberflächengüte aufweist und somit das von dem Laser unter einem gewissen Abstrahlwinkel emittierte Licht bündeln kann, ohne einen Abbildungsfehler durch Oberflächenungenauigkeiten zu verursachen. Ein solcher Abbildungsfehler unmittelbar nach dem emittierenden Bereich des Lasers würde zu einer größeren Ungenauigkeit auf der Druckform führen. Die in Strahlrichtung des Laserlichtes hinter der sphärischen Linse angeordnete mindestens eine asphärische Linse wird gewöhnlich durch Pressen hergestellt und kann nicht wie die sphärische Linse geschliffen werden, so dass die asphärische Linse bezüglich ihrer gewünschten Krümmung genauer gefertigt werden kann als die sphärische Linse, jedoch eine geringere Oberflächenqualität aufweist. Mit der mindestens einen asphärischen Linse kann also aufgrund der sehr genau fertigbaren Krümmung eine sehr gute Fokussierung des von der sphärischen Linse gebündelten Laserlichtes erhalten werden, wobei sich Fehler bzw. Ungenauigkeiten auf der Oberfläche der mindestens einen asphärischen Linse kaum oder nur unmerkbar auf die Abbildung auswirken, da nur der in der Gegenstandsebene des Linsensystems liegende Abstrahlbereich des Lasers scharf abgebildet wird, wobei Oberflächenungenauigkeiten, wie zum Beispiel Kratzer, nur diffus mit äußerst geringer Leistung abgebildet werden und somit qualitativ zu einer kaum merkbaren Verschlechterung führen. Die mindestens eine zur Bündelung des Laserlichtes verwendete sphärische Linse kann also aufgrund der hohen Oberflächengüte eine präzise Bündelung des von einem Laser emittierten Laserlichts durchführen, wobei im Wesentlichen nur sphärische Aberration als Fehler auftritt. Die nachgeordnete asphärische Linse kann aufgrund der präzise fertigbaren gewünschten Krümmung die möglichst exakte Fokussierung des Laserlichtes bewirken, wobei die sphärische Aberration der ersten Linse korrigiert wird. Oberflächenfehler der nachgeordneten asphärischen Linse führen nicht zu einem merkbaren Qualitätsverlust der Abbildung, wie dies bei einer Linse der Fall wäre, die in der Nähe des Gegenstandes angeordnet ist. Somit kann durch die erfindungsgemäße Kombination von sphärischen und asphärischen Linsen eine präzise Fokussierung des von einem Laser, wie zum Beispiel einem kanten- oder oberflächenemittierenden Laser ausgesandten Laserlichtes auf eine Druckform zur Bebilderung erhalten werden.

Bevorzugt können sphärische als auch asphärische Linsen auch durch ein Spritzgussverfahren hergestellt werden, wenn es sich um eine Kunststofflinse handelt. Eine solch hergestellte asphärische Linse kann eine wunschgemässe Krümmung aufweisen, was bei den durch Schleifverfahren gefertigten spärischen Linsen nicht möglich ist.

Jedoch kann auch ganz auf eine sphärische Linse verzichtet werden, z. B. wenn die mindestens eine asphärische Linse eine Abbildung mit ausreichender Qualität sicherstellen kann, da z. B. das Laserlicht schon ausreichend gebündelt unter kleinem Abstrahlwinkel aus dem Laser austritt.

Es kann also auf eine Faseroptik verzichtet werden, um von einem Laser emittiertes Licht auf eine Druckform zu richten.

Im Sinne der Erfindung wird unter dem Begriff sphärische Linse ein oder mehrere optische Elemente verstanden, welche eine Oberfläche aufweisen, die bei einem Querschnitt mindestens einen Bereich aufweisen, welcher einen in etwa konstanten Krümmungsradius aufweist, wie zum Beispiel bikonvexe oder plankonvexe Linsen, wobei eine sphärische Linse zum Beispiel eine runde Sammellinse mit sphärischer Oberfläche oder eine Zylinderlinse sein kann, welche beispielsweise die Gestalt eines halben Vollzylinders aufweisen kann, so dass das Laserlicht beispielsweise an der Schnittfläche des Halbzylinders eintritt und durch die Manteloberfläche des Halbzylinders gebündelt austritt.

Eine asphärische Linse im Sinne der Erfindung kann aus einem oder mehreren optischen Elementen bestehen, welche einen oder mehrere gekrümmte Oberflächenbereiche aufweisen, die im wesentlichen nicht sphärisch sind, also keinen konstanten Krümmungsradius aufweisen.

Bevorzugt ist die mindestens eine sphärische Linse als Zylinderlinse ausgebildet, so dass das von zum Beispiel einem kantenemittierenden Laser in einer Richtung senkrecht zur Abstrahlrichtung und senkrecht zum emittierenden Bereich des Lasers (nachfolgend als vertikale Richtung bezeichnet) gewöhnlich unter einem größeren Abstrahlwinkel von zum Beispiel 35 bis 40° emittierte Laserlicht über die gesamte Länge des emittierenden Laserbereiches gebündelt werden kann, wobei im wesentlichen keine Bündelung des Laserlichtes in horizontaler Richtung, also parallel zu dem emittierenden Bereich verlaufend, erfolgt, da der Abstrahlwinkel eines kantenemittierenden Lasers in horizontaler Richtung vergleichsweise gering ist, also beispielsweise nur 8 bis 10° beträgt, so dass die Bündelung oder Fokussierung auch in größerer Entfernung vom emittierenden Bereich erfolgen kann.

Vorteilhaft ist ein optisches Element in dem Linsensystem vorgesehen, wobei auf der einen Seite des optischen Elements eine erste Linse bzw. Linsensystem ausgebildet ist, an welchem Laserlicht in das optische Element eintritt und wobei an der gegenüberliegenden Seite des optischen Elements eine zweite Linse bzw. Linsensystem ausgebildet ist, durch welches Laserlicht wieder aus dem optischen Element austritt. Dabei kann die erste und/oder zweite Linse bzw. Linsensystem eine sphärische oder asphärische Linse sein, so dass zum Beispiel ein Körper geschaffen wird, welcher auf einer Seite eine sphärische und auf der gegenüberliegenden Seite eine asphärische Linse oder auf beiden Seiten sphärische oder asphärische Linsen aufweist. Dabei können auch mehrere Linsen nebeneinander angeordnet sein, wobei die Linsen so ausgebildet sein können, dass die Linse(n) auf der einen Seite des Körpers eine Fokussierung in einer ersten oder vertikalen Richtung und die Linse(n) auf der anderen Seite des Körpers eine Fokussierung in einer zweiten oder horizontalen Richtung bewirken, wobei die erste und zweite Richtung auch einen Winkel von zwischen 0° und 90° zueinander aufweisen können. Es ist jedoch auch möglich, die Kombination solcher Linsen bzw. Linsensysteme mit getrennten optischen Elementen zu realisieren, d.h. diese Linsen bzw. Linsensysteme müssen nicht als ein Körper realisiert werden. Dabei ist es insbesondere von Vorteil, die Linsen so aufeinander abzustimmen, dass die Bildebene in horizontaler Richtung in etwa oder genau mit der Bildebene in vertikaler Richtung zusammenfällt, d.h., dass die Abbildungswege für eine horizontale und vertikale Abbildung identisch oder im Wesentlichen gleich sind. Da es aufgrund der Verwendung von Zylinderlinsen möglich ist, auf die vertikale und horizontale Richtung der Laserstrahlung an unterschiedlichen Positionen entlang des Strahlungswegs einzuwirken, ist es möglich trotz gleicher Strahlungswege unterschiedliche Abbildungsmaßstäbe für die vertikale und horizontale Richtung zu erreichen. Dabei kann durch ein vergrößernde Abbildung der Einfallswinkel der Laserstrahlung auf die Druckform verkleinert werden, was die Tiefenschärfe erhöht. Umgekehrt bewirkt eine verkleinernde Abbildung eine Verminderung der Tiefenschärfe.

Das erfindungsgemäße System zum Bebildern einer Druckform weist ein Linsensystem wie oben beschrieben auf und besitzt einen oder mehrere kantenemittierende Laser, um bei geeigneter Modulation des Laserlichtes ein gewünschtes Bild zu erzeugen.

Bevorzugt ist das System so ausgebildet, dass der Brennpunkt der in der Nähe des Lasers angeordneten sphärischen Linse bzw. des sphärischen Linsensystems hinter dem emittierenden Bereich des Lasers liegt, um zwar eine Bündelung des emittierenden Laserlichtes, jedoch keine Fokussierung zu erhalten, welche nachfolgend durch die asphärische Linse(n) durchgeführt wird.

Vorteilhaft ist eine Druckform Bestandteil des beschriebenen Systems, wobei die Druckform zum Beispiel eine sogenannte prozessfreie Druckplatte sein kann, welche auf oder alternativ auch losgelöst von einer Drucktrommel bebildert wird. Dies kann durch Bewegen des Lasers bzw. Linsensystems relativ zur ruhenden oder sich selbst bewegenden, zum Beispiel rotierenden Druckform erfolgen, wobei dann der Laser und/oder das Linsensystem auch still stehen kann oder bewegt werden kann, zum Beispiel entlang einer Rotationsachse der Druckform. Das Bebildern kann zum Beispiel durch langsames Verschieben des rotierenden Druckformzylinders entlang seiner Rotationsachse erfolgen, wobei dann der Laser mit dem Linsensystem stillstehen kann. Allgemein umfasst die Erfindung alle Anwendungsgebiete beim Drucken, bei welchen eine Druckform mit Licht bebildert wird, wobei die Erfindung insbesondere bei Nassoffset-Rotationsdruckmaschinen, im Rollenrotationsdruck und bevorzugt für den Zeitungsdruck und/oder Zeitungsakzidenzdruck eingesetzt wird, bei welchem meistens eine große Zahl von Druckformen in kurzer Zeit hergestellt werden soll.

Nach einem Verfahren zum Bebildern einer Druckform wird ein Laser oder ein Laser-Array kontinuierlich zum Bebildern eines Flächenelements mit vorgegebener Breite und Höhe betrieben, wobei das z. B. von einem kanten- oder oberflächenemittierenden Laser emittierte Laserlicht durch das oben beschriebene Linsensystem so auf der Druckform fokussiert wird, dass ein fokussierter Streifen erhalten wird, welcher eine Breite aufweist, welche im wesentlichen gleich der Breite des zu belichtenden Flächenelementes ist, wobei die Höhe des Streifens kleiner als die Höhe des Flächenelementes ist. Der Streifen wird so über das Flächenelement geführt, dass im wesentlichen die gesamte Höhe des Flächenelementes von dem fokussierten Laserlichtstreifen überstrichen wird, wodurch ein bestimmtes Flächenelement vollständig belichtet werden kann.

Wird zum Beispiel ein 60 µm x 1 µm großer Lichtaustritt eines kantenemittierenden Lasers so auf die Druckform fokussiert, das in vertikaler Richtung eine vierfache Vergrößerung des Strahls erhalten wird, während in horizontaler Richtung eine 1:1 Abbildung erfolgt, so erreicht man zum Beispiel in beiden Richtungen einen Einfallswinkel von 8°-10°. Das Bild des Streifens hat dann 60 µm x 4µm und kann immer noch als schmaler Streifen angesehen werden. Zudem ist die beugungsbedingte Unschärfe größer als die Spothöhe. Soll aus diesem Streifen ein ca. 60 µm x 60 µm großes Flächenelement erzeugt werden, so müsste bei einer Druckformgeschwindigkeit von 1 m/s der Laser für 60 µs eingeschaltet werden. Es ist auch möglich durch kürzere Einschaltzeiten kleinere Flächenelemente zu erzeugen, z. B. 60 µm x 30 µm bei 30 µs Einschaltzeit. Die Einschaltzeiten liegen typischerweise bei mehreren µs, zum Beispiel im Bereich von 1-100 µs, insbesondere 10-90 µs oder 30-70 µs, was im Zusammenhang mit Halbleiter-Laserdioden als kontinuierlicher Betrieb (continuous wavejew) angesehen wird.

Dabei kann der Laser bzw. das Laser-Array nach dem Belichten des Flächenelementes entweder abgeschaltet werden, bis eine Positionierung bezüglich eines neuen zu belichtenden Flächenelementes erfolgt ist, oder weiterbetrieben werden, falls im Anschluss an den durchgeführten Belichtungsvorgang sofort ein weiteres Flächenelement belichtet werden soll.

Es ist auch möglich, die Laseroptik für einen Pulsbetrieb zu verwenden, wobei die gleichen Vorteile resultieren, wie beim kontinuierlichen Betrieb.

Die Erfindung wird nachfolgend anhand bevorzugter Ausführungsformen beschrieben werden, wobei:
- Figur 1: ein erfindungsgemäßes Linsensystem mit einem kantenemittierenden Laser und Fokussierung des Strahlenganges in vertikaler Richtung zeigt;
- Figur 2: das optische Element von Figur 1 in verschiedenen Ansichten zeigt;
- Figur 3: eine Draufsicht auf das Linsensystem von Figur 1 zur Verdeutlichung der Fokussierung des Strahlenganges in horizontaler Richtung zeigt;
- Figur 4: eine Verteilung der Energiedichte eines von einer punktförmigen Lichtquelle ausgesandten Lichtstrahls auf einer Druckform zeigt;
- Figur 5: den Anteil der auf einen Kreis mit Mittelpunkt auf dem Fokussierungspunkt auftreffenden Energie in Relation zur gesamten auftreffenden Lichtenergie in Abhängigkeit von dem Radius des Kreises zeigt;
- Figur 6: einen fokussierten Lichtpunkt in Abhängigkeit von einer Verschiebung der Druckform bezüglich der exakten Fokussierung zeigt; und
- Figur 7: das Belichten eines Flächenelements mit einem Laser nach dem erfindungsgemäßen Verfahren zeigt.

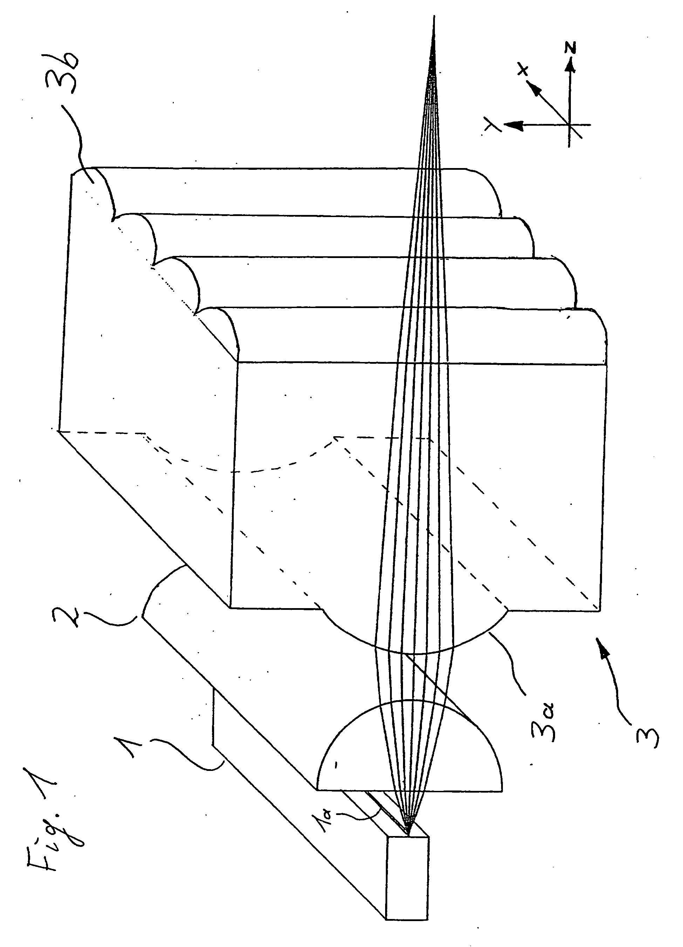

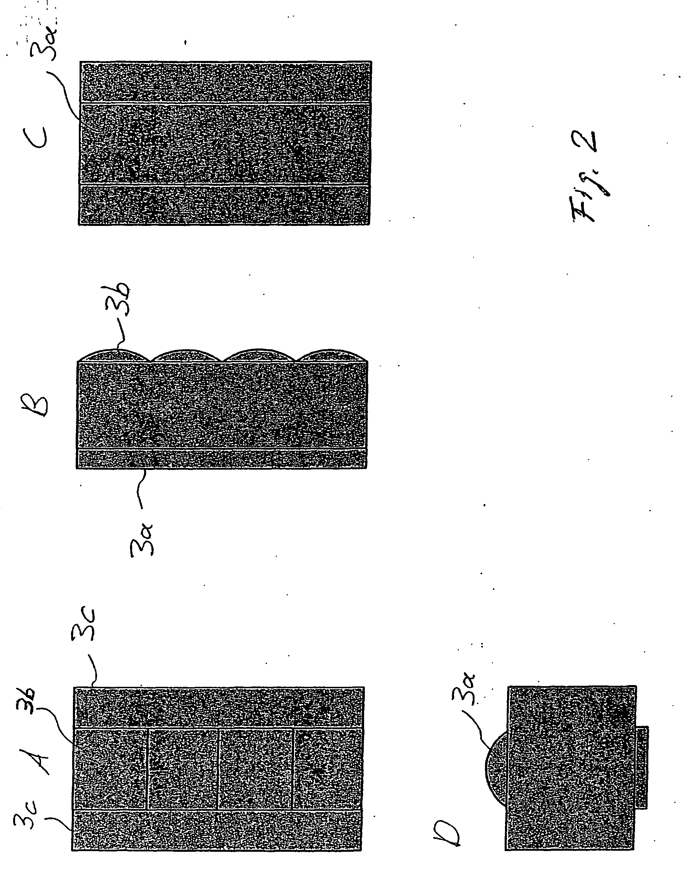

Figur 1 zeigt eine kantenemittierenden Laser 1, welcher an einem Laserlicht emittierenden Bereich 1a Laserlicht emittiert, welches auf eine sphärische Zylinderlinse 2 gerichtet ist. Der in Figur 1 eingezeichnete Strahlengang dient zur Veranschaulichung der Bündelung des Laserlichtes in vertikaler Richtung; im eingezeichneten Koordinatensystem durch die y-Achse dargestellt. Das auf die sphärische Zylinderlinse 2 mit einem relativ großen Abstrahlwinkel auftreffende Laserlicht wird gebündelt und auf das optische Element 3 gerichtet, welches parallel zur sphärischen Zylinderlinse 2 verlaufend eine asphärische Linse 3a aufweist, um das gebündelte Laserlicht zu fokussieren. Das durch die asphärische Linse 3a fokussierte Laserlicht tritt durch das optische Element 3 hindurch und an der Rückseite des optischen Elements aus, ohne dass der Strahlengang des Laserlichtes in vertikaler Richtung verändert wird, da die in vertikaler Richtung (y-Richtung) verlaufenden asphärischen Linsen 3b keine Ablenkung des Laserlichtes in vertikaler Richtung verursachen. Somit kann mit dem in Figur 1 gezeigten Linsensystem bestehend aus sphärischer Zylinderlinse 2 und optischem Element 3 mit asphärischer Linse 3a eine Bündelung des vom kantenemittierenden Laser 1 ausgesandten Laserlichtes in y-Richtung erhalten werden, wobei der erzeugte Laserspot eine in vertikaler Richtung vergrößerte Abbildung des Lichtaustrittsstreifens darstellt. Figur 3 zeigt eine Draufsicht auf einen Teilbereich des in Figur 1 gezeigten Systems zur Verdeutlichung der Bündelung des Strahlenganges in horizontaler bzw. x-Richtung. Zur Vereinfachung ist nur eine in vertikaler Richtung verlaufende asphärische Linse 3b des optischen Elements 3 gezeigt. Ein von einer punktförmigen Lichtquelle des Lasers 1 austretender Laserstrahl tritt durch die sphärische Linse 2 hindurch ohne wesentlich in horizontaler Richtung abgelenkt zu werden und tritt in das optische Element 3 ein, wobei der aufgefächerte Laserstrahl ebenfalls im wesentlichen nicht durch die asphärische Linse 3a abgelenkt wird. Beim Austreten aus dem optischen Element 3 tritt das aufgefächerte Laserlicht durch eine in vertikaler Richtung verlaufende asphärische Linse 3b hindurch, welche das Laserlicht auf einen vorgegebenen Punkt zum Beispiel auf einer Druckform fokussiert, wobei der Laserspot in horizontaler Richtung eine 1:1 Abbildung des Lichtaustrittstreifen darstellt.

Aus den in den Figuren 1 und 3 gezeigten Strahlengängen lässt sich somit erkennen, dass die Fokussierung des Laserlichtes in vertikaler Richtung durch eine Kombination aus sphärischer Linse 2 und asphärischer Linse 3a erhalten wird, wobei die Fokussierung in horizontaler Richtung durch die asphärische Linse 3b bewirkt wird, so dass bei einem Laser mit unterschiedlicher Abstrahlcharakteristik in horizontaler und vertikaler Richtung eine aufeinander abgestimmte Fokussierung des Laserlichtes ermöglicht wird. Da das Laserlicht bei einem kantenemittierenden Laser 1 in vertikaler Richtung im allgemeinen einen größeren Abstrahlwinkel aufweist als in horizontaler Richtung, ist die sphärische Linse 2 zum Bündeln des Laserlichtes in unmittelbarer Nähe des Lasers 1 vorgesehen und sollte zur Erzielung einer hohen Abbildungsqualität eine qualitativ hochwertige Oberfläche aufweisen. Zur Fokussierung des Laserlichtes in horizontaler und vertikaler Richtung werden die asphärischen Linsen 3a und 3b verwendet, welche keine qualitativ so hochwertige Oberfläche aufweisen müssen, wie die sphärische Linse 2, da die asphärischen Linsen 3a und 3b weiter von dem Laser 1 entfernt sind und sich somit Oberflächenfehler auf der Druckform nur gering durch diffuse Streuung bemerkbar machen. Da der Abstrahlwinkel eines kantenemittierenden Lasers 1 in horizontaler Richtung erheblich geringer ist als in vertikaler Richtung, kann z. B. auf eine Linse in der Nähe des Lasers zum Sammeln des Laserlichtes in horizontaler Richtung verzichtet werden. Jedoch kann eine solche Linse auch ergänzend vorgesehen werden.

Alternativ zu der in den Figuren 1 und 3 gezeigten Anordnung können verschiedene andere Anordnungen verwendet werden, wobei zum Beispiel die zur Bündelung des Lichtes in horizontaler Richtung dienenden Linsen 3b näher an der sphärischen Linse 2 angeordnet sein können, als die Linse 3a zur Bündelung des Laserlichtes in vertikaler Richtung. Weiterhin ist es zum Beispiel denkbar, alle Linsensysteme getrennt voneinander auszubilden, also zum Beispiel getrennte Linsensysteme 3a und 3b vorzusehen, oder beispielsweise die sphärische Linse 2 mit einer der asphärischen Linsen 3a oder 3b in einem optischen Element zu kombinieren. Ebenso ist es denkbar, das gesamte Linsensystem in einem einzelnen optischen Element zu integrieren, was zum Beispiel durch Verwendung verschiedener Materialien mit unterschiedlichem Brechungsindex realisiert werden kann, so dass zum Beispiel innerhalb eines solchen einstückigen optischen Elements die asphärische Linse 3a oder jede andere Linse durch den Einsatz eines Materials mit einem anderen Brechungsindex als das umgebende Material realisiert werden kann.

Figur 2 zeigt verschiedene Ansichten des in Figur 1 gezeigten optischen Elements 3, wobei Figur 2A eine Draufsicht auf das optische Element 3 von der Seite der asphärischen Linsen 3b zeigt und ober- und unterhalb der asphärischen Linsen 3b noch in Figur 1 nicht dargestellte überstehende Bereiche 3c des optischen Elements 3 gezeigt sind. Figur 2B zeigt eine Draufsicht auf das optische Element 3 in Figur 1. Figur 2C zeigt eine Ansicht des optischen Elements 3 der Seite mit der asphärischen Linse 3a. Die Figuren 2D und 2E zeigen eine Seitenansicht des optischen Elements 3, jeweils mit überstehenden Bereichen 3c.

Figur 4 zeigt die Energieverteilung eines von einer punktförmigen Lichtquelle ausgesandten und durch das Linsensystem auf einen Punkt fokussierten Laserlichtes in der x-y-Ebene auf der Druckform, wobei ersichtlich ist, dass im Wesentlichen kein Licht außerhalb des Fokussierbereiches auftrifft

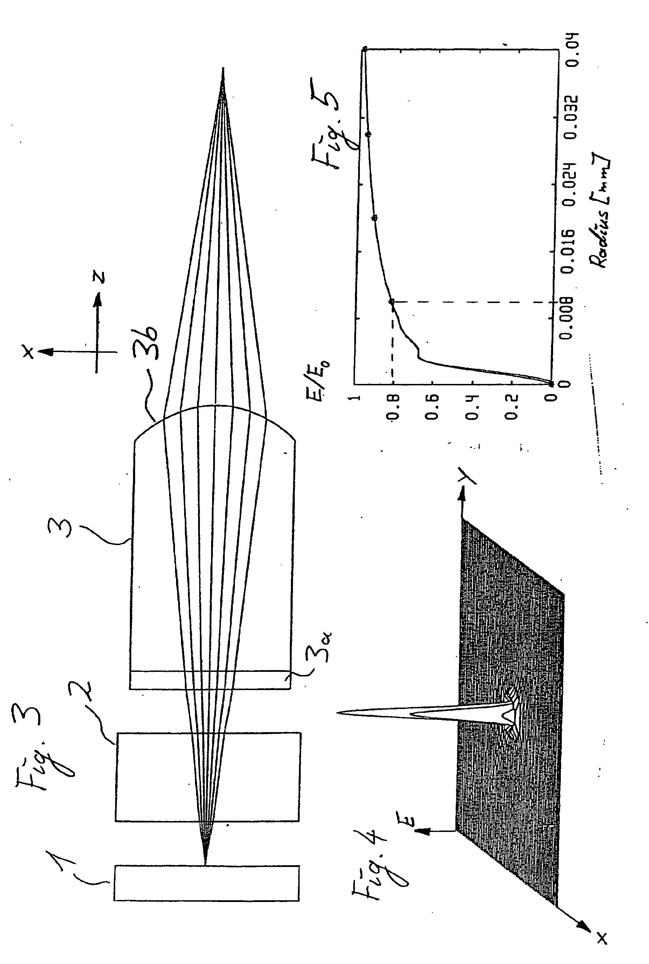

Figur 5 zeigt quantitativ die Verteilung der auftreffenden Energie einer Punktlichtquelle um den Fokussierpunkt. So treffen fast 100 % der gesamten auftreffenden Energie Eo innerhalb eines Bereiches von 0,04 mm um den Fokussierpunkt auf, wobei 80 % der Energie in einem Kreis mit einem Radius von etwa 0,01 mm um den Fokussierpunkt auftreffen; in Figur 5 durch die gestrichelte Linie dargestellt.

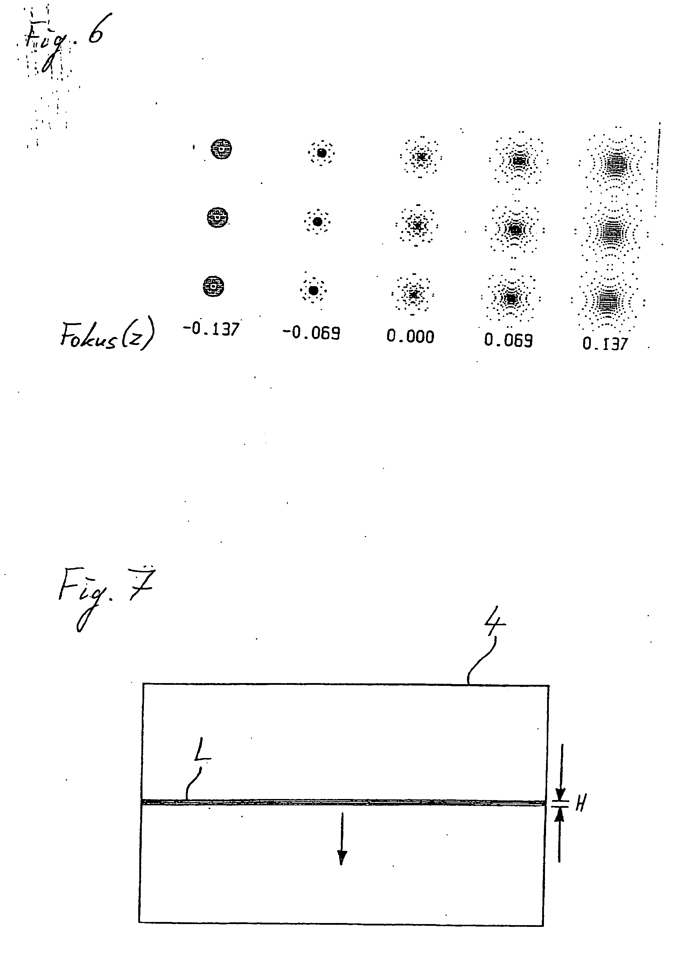

Figur 6 zeigt die Fokussierung dreier übereinander auftreffender Lichtpunkte auf einer Druckform bei genauer Positionierung der Druckform im Fokussierbereich; mittlere drei Punkte. Die um 0,069 bzw. 0,137 mm in z-Richtung verschobene Druckform erzeugt die in Figur 6 rechts und links der exakt fokussierten Punkte dargestellten Abbildungen, bei welchen die Energieverteilung nicht mehr auf den Mittelpunkt konzentriert ist.

Figur 7 veranschaulicht ein Verfahren zum Belichten eines Flächenelementes 4 mit einem fokussierten Laserlichtstreifen L, welcher in der in Figur 7 gezeigten Ausführungsform das Flächenelement 4 von oben nach unten überstreicht, wobei die Höhe H des Laserlichtstreifens etwa 5 µm beträgt bei seitlicher Ausdehnung des Laserlichtstreifens von beispielsweise 60 bis 100 µm, um das Flächenelement 4 vollständig zu belichten. Dabei ist eine nicht so genaue Fokussierung des über die gesamte Länge 1a emittierenden Lasers auf den Laserlichtstreifen L zur exakten Belichtung des Flächenelements 4 von eher untergeordneter Bedeutung, da sich solche Fokussier-Ungenauigkeiten nur an den Randbereichen mit relativ kleiner Energieabgabe außerhalb des Flächenelements 4 auswirken und eine horizontale ungenaue Fokussierung zum Beispiel im Mittelbereich des Laserlichtstreifens L immer noch zu einer Belichtung innerhalb des gewünschten Bereiches führt.

## Patentansprüche

1. Abbildungsvorrichtung für das Bebildern einer Druckform mit:
a) einer zu bebildernden Druckform;
b) einem kantenemittierenden Halbleiter-Laser (1); und
c) einem Linsensystem für den Laser (1) zum Bebildern der Druckform mit:
c1) mindestens einer Linse (2), welche eine Oberfläche aufweist, die bei einem Querschnitt mindestens einen Bereich aufweist, welcher einen in etwa konstanten Krümmungsradius aufweist und welche zwischen dem Laser (1) und der Druckform angeordnet ist, um den Abstrahlwinkel des von dem Laser (1) ausgesandten Laserlichts zu verkleinern und das Laserlicht auf ein optisches Element (3; 3a, 3b) zu richten; und
c2) einem optischen Element (3), welches zwischen der Linse (2) und der Druckform angeordnet ist, zum Fokussieren des Laserlichts auf einen gewünschten Punkt auf der Druckform,
**dadurch gekennzeichnet, dass** das optische Element (3) aufweist;
- eine erste integrierte Linse (3a) auf einer ersten Seite des optischen Elements (3), welche einen oder mehrere gekrümmte Oberflächenbereiche aufweist, die keinen konstanten Krümmungsradius aufweisen, um das Licht in einer vertikalen Richtung zu fokussieren, und
- eine zweite integrierte Linse (3b) auf einer gegenüberliegenden Seite des optischen Elements (3), welche einen oder mehrere gekrümmte Oberflächenbereiche aufweist, die keinen konstanten Krümmungsradius aufweisen, um das Licht in einer horizontalen Richtung zu fokussieren.

2. Abbildungsvorrichtung nach Anspruch 1, wobei mindestens eine Linse als Zylinderlinse ausgebildet ist.

3. Abbildungsvorrichtung nach einem der vorhergehenden Ansprüche, wobei die erste Linse (2) so vor einem emittierenden Bereich (1a) des Lasers (1) angeordnet ist, dass der Brennpunkt der ersten Linse (2) weiter von der ersten Linse (2) entfernt ist als der lichtemittierende Bereich (1a).

## Claims

1. An imaging device for illustrating a printing form, comprising:
a) a printing form to be illustrated;
b) an edge-emitting semiconductor laser (1); and
c) a lens system for the laser (1) for illustrating the printing form, comprising:
c1) at least one lens (2), exhibiting a surface which in cross-section comprises at least one area exhibiting a broadly constant curvature radius, and arranged between the laser (1) and the printing form, in order to reduced the angle of radiation of the laser light emitted by the laser (1) and to direct the laser light onto an optical element (3; 3a, 3b); and
c2) an optical element (3), arranged between the lens (2) and the printing form, for focussing the laser light onto a desired point on the printing form;
**characterised in that** the optical element (3) comprises:
- a first integrated lens (3a) on a first side of the optical element (3), comprising one or more curved surface areas which do not exhibit a constant curvature radius, in order to focus the light in a vertical direction; and
- a second integrated lens (3b) on an opposite side of the optical element (3), comprising one or more curved surface areas which do not exhibit a constant curvature radius, in order to focus the light in a horizontal direction.

2. The imaging device according to claim 1, wherein at least one lens is formed as a cylinder lens.

3. The imaging device according to any one of the preceding claims, wherein the first lens (2) is arranged in front of an emitting area (1a) of the laser (1), such that the focal point of the first lens (2) is further away from the first lens (2) than the light-emitting area (1a).

## Revendications

1. Dispositif de formation d'image pour la réalisation d'une image ou d'un cliché sur une forme d'impression, comprenant :
a) une forme d'impression sur laquelle doit être réalisée l'image ;
b) un laser à semi-conducteur (1) à émission de bord ; et
c) un système de lentilles destiné au laser (1) pour la réalisation de l'image sur la forme d'impression, comprenant :
c1) au moins une lentille (2) qui a une surface qui, pour une section transversale, comporte au moins une zone ayant un rayon de courbure sensiblement constant, et qui est disposée entre le laser (1) et la forme d'impression, pour réduire l'angle de rayonnement de la lumière laser émise par le laser (1) et diriger la lumière laser sur un élément optique (3 ; 3a, 3b) ; et
c2) un élément optique (3) qui est disposé entre la lentille (2) et la forme d'impression, pour focaliser la lumière laser sur un point souhaité sur la forme d'impression,
**caractérisé en ce que** l'élément optique (3) comprend :
- une première lentille intégrée (3a), d'un côté de l'élément optique (3), qui a une ou plusieurs zones de surface courbes n'ayant pas de rayon de courbure constant, pour focaliser la lumière dans une direction verticale, et
- une deuxième lentille intégrée (3b) d'un côté opposé de l'élément optique (3), qui a une ou plusieurs zones de surface courbes n'ayant pas de rayon de courbure constant, pour focaliser la lumière dans une direction horizontale.

2. Dispositif de formation d'image selon la revendication 1, au moins une lentille étant réalisée en tant que lentille cylindrique.

3. Dispositif de formation d'image selon l'une des revendications précédentes, la première lentille (2) étant disposée de manière telle devant une zone d'émission (1a) du laser (1), que le foyer de la première lentille (2) soit plus éloigné de la première lentille (2) que la zone (1a) d'émission de lumière.
